# EUROPEAN PATENT APPLICATION

(11) **EP 0 732 065 A1**
(43) Date of publication of application: **18.09.1996**
(21) Application number: 95917367.5
(22) Date of filing: 05.05.1995
(51) Int. Cl.: A41D 13/00

(54) **SELF-INFLATABLE LIFE JACKET FOR MOTORCYCLE RIDERS**

(30) Priority: 06.05.1994 ES 9401233 U
(71) Applicant: SIERRA MEDINA, Manuel, E-28030 Madrid (ES)
(72) Inventor: SIERRA MEDINA, Manuel, E-28030 Madrid (ES)
(74) Representative: Fernandez Candelas, Carlos
(86) International application number: ES9500050
(87) International publication number: WO9530345

(57) **Abstract**

A self-inflatable safety jacket for motorcycle riders characterized by being fitted inside (1) with two small bottles of compressed air (2), located at the sides of the jacket, whose outlet valves are connected to cords (3) housed in the jacket's inside seams, emerging from the front bottom of the jacket and bearing a spring hook (4) at their end for securing to the place provided for such purpose on the motorcycle. Should an accident occur and the motorcyclist were to be thrown clear, the cords are tensed and fly off the jacket, triggering the small bottles' safety catches which causes the jacket to automatically inflate and protect the motorcyclist in his fall. Inside air escape valves (7) have been provided allowing air to escape proportionally to the impact received and thus providing a cushioning effect. This invention may be adapted to conventional motorcyclist garments already existing in the market place.

## Description

As the title of this Utility Model implies, the invention being claimed in this application consists of a jacket which, used as a garment by motorcycle riders when driving their motorcycles, fulfils the function of a vital safety element in the event of an accident.

This is because, should the motorcyclist suffer a collision and be thrown off the motorcycle, the jacket here being claimed self-inflates to protect the driver since it cushions his fall.

This jacket may also be worn by a motorcycle passenger who will also benefit from its safety effects in the event of an accident.

Society is fully aware nowadays of the importance of traffic safety measures, particularly as far as motorcycle riders are concerned. These are drivers highly exposed to the accident risk.

This is why the crash helmet has been made compulsory for motorcycle drivers and passengers, since statistics show that their heads suffer the most important injuries.

This invention fits in with this tendency towards ensuring motorcycle riders protection and safety from injury in accidents. It has been conceived in attention to the total absence at the present time of protection for motorcycle riders in accidents where damage to the spine causing paraplegia, tetraplegia or other permanent, tragically serious and important injuries is involved.

The invention which is the subject of this Utility Model provides motorcycle riders with an original safety system in driving. In the event of accident, it protects them from the aforesaid risk of spinal injuries, particularly the irreversible type, as it guards their thorax, neck and lower part of the body against blows and contusions.

This is achieved via a simple device very easy for the motorcyclist to use and also to fit onto the motorcycle. It provides notable advantages in use and manufacture and may even be produced at a low purchase price leading to widespread use amongst motorcycle riders and in turn leading to a reduction in the serious consequences of accidents.

This innovative safety effect described is achieved because the jacket which is the subject of this Utility Model has a space or gap covering its whole area which self-inflates in the event of accident using compressed air bottles inside. These are activated at the very instant the accident occurs by cords hooked to the motorcyclist's body.

To this effect, if the motorcyclist or passenger are in any way thrown off the motorcycle in a collision, the said cords fitted into their jackets are tensed through being hooked at one end to the motorcycle until the opposite ends connected to the respective bottles of compressed air activate a safety catch on them and, consequently, the jacket's inside space self-inflates.

This effect occurs so quickly that the motorcyclist thrown off his machine by the collision falls with the whole of his body and neck protected by the padding provided by his jacket inflated by the compressed air inside. This considerably cushions the blows which these vulnerable areas of the body may receive in the fall.

To achieve this functional effect, the invention which is the subject of this Utility Model consists in a jacket looking on the outside like a conventional type of garment, fitted with a front zip, sleeveless and covering the body of the person wearing it from waist to neck.

To the effects conceived in this invention, the jacket in question has been designed with an inside hollow space between its outer and inner linings of fabric. This will have to be carefully chosen in order to have suitable resistance to possible heavy friction and may even be fireproofed.

Each of the outlet valves of two bottles of compressed air which the jacket being claimed carries allows air to escape into the jacket's inside space. Such bottles are fitted to the inside in such a way that they do not make it uncomfortable for the jacket's wearer.

The safety catch on each of these two bottles is connected to a respective cord, preferably textile in nature, with great strength and practically nil elasticity, running on the inside of the pertinent seam provided in the jacket itself. This seam has an orifice opening to the outside.

The end of each cord opposite that which connects to the safety catch on the respective compressed air bottle and which emerges from the jacket to the outside, is fitted with a spring hook which is hooked to the due securing element fitted to the motorcycle.

The cords to be hooked to the motorcycle will be between 20 and 30 cms. in length so that motorcycle riders may alight from their machines and such length will prevent the cord inadvertently inflating the jacket. At the same time, it would not be prevented from acting in the event of an accident. An excessive length of cord would dangerously prolong the jacket's self-inflation time up to the extent whereby it may not function before the motorcyclist were to hit the ground.

The hook-on element in question may form part of the motorcycle body during manufacture at origin or may consist in an accessory easy to fit to any type of motorcycle.

This hook-on device must be located in two positions for use either by the driver or the passenger. In the former, it must be located in an area in front of the driver once he has mounted the motorcycle in his normal driving position.

In this case, the position of the said area where the hook-on device onto which the jacket cords will be hooked via their spring hooks will be preferably located at the mid centre top point, on the motorcycle's longitudinal centre line, where the petrol tank and the motorcycle seat join.

In the example of embodiment of this Utility Model with respect to this characterizing feature of the invention being claimed, it is suggested that a flexible chain with a rod in its centre on which the spring hooks are hooked be used. It is placed by the motorcyclist himself round the body of the motorcycle in its vertical plane.

It should be repeated that when adapting the motorcycle from its factory origin to the safety system contemplated in this Utility Model, the hook-on device for the spring hooks in question could be any known conventional type deemed most convenient, since this formal aspect does not alter the essential nature of the invention being claimed in this Model.

The motorcycle passenger's jacket may be hooked directly onto the little rail or hand grips which most motorcycles nowadays have fitted for the passenger to hold onto or onto a chain of the type described above.

The self-inflating safety jacket for motorcycle riders as claimed in this Utility Model operates very simply. After putting it on like any conventional garment of this type, the motorcyclist only has to secure the cord spring hooks emerging from the jacket itself to the hook-on point provided on the motorcycle body either in the factory or fitted as an accessory item. The passenger likewise follows the same operation for his own jacket hooked onto the rear hook-on devices mentioned above.

Should an occident occur where the driver and passenger are thrown clear of the machine, the cords joining the motorcycle to each of the safety jackets tense until the limited length of these cords activate the safety catch on the compressed air bottles inside the jackets which immediately inflate the inside space.

At this point it must be clarified that the jacket's inside space has been calculated to have a volume somewhat higher than the volume of air expelled from the bottles. Otherwise, when self-inflating, the jacket would be stiff and would become a very solid, compact body which would not provide the cushioning, yielding effect achieved by having the said higher margin of inside space in the jacket.

As an additional safety measure also to prevent the jacket becoming excessively solid and thus not protecting and cushioning its user's fall by turning into a surface as hard as the floor itself or any other surface which the motorcyclist may hit, the inside of the jacket is planned to have a variable number of conventional valves. These will only allow the air blown in by the compressed air bottles to exit the jacket's inside space when these valves sense the pressure of the motorcyclist's body hitting the ground or any other surface after falling from the motorcycle.

In order to facilitate understanding of the invention being claimed, the following figures are shown on the attached drawings sheet as an example and not limited in scope. The drawings define the representation of a way of practical embodiment of the essential nature inherent to the invention which is the subject of this Utility Model.

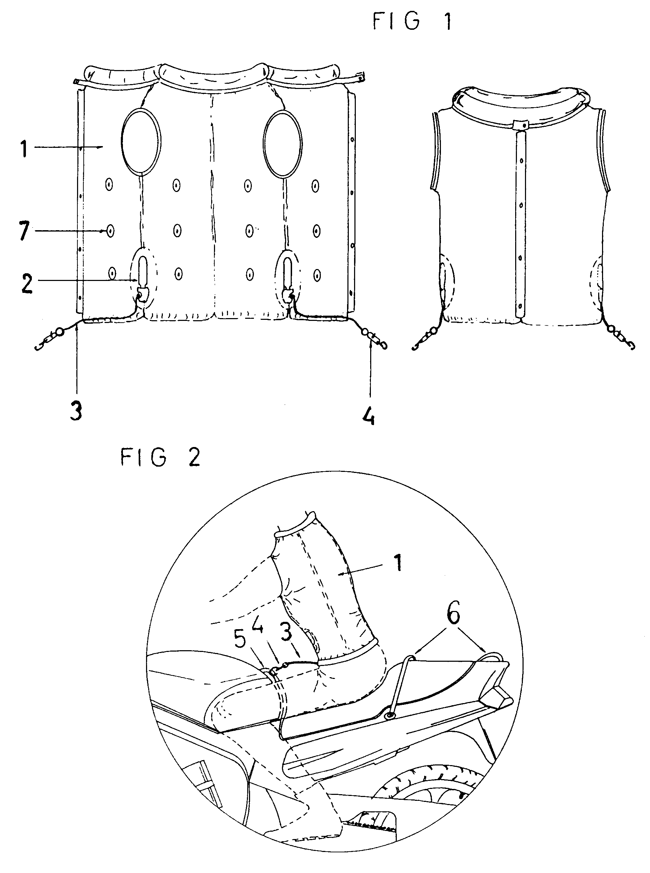

Figure 1 shows a front view of the opened jacket being claimed, enabling the compressed air bottles and cords to be seen.

Figure 2 gives a detail of a partial view in a side elevation of a motorcycle fitted with an example of the conception of the hook-on making up the safety element which is the subject of this Model as well as the way in which the jacket's cord spring hooks are secured to it.

The jacket (1), provided with the compressed air bottles (2) which have their respective safety catches connected to cords (3) running inside seams provided inside the jacket (1) which have a spring hook (4) at the end emerging from the jacket for hooking onto the securing element (5) provided for the driver or onto the securing item (6) for the passenger, which may be embodied in permanent fashion into the body of the motorcycle or may be provided as an accessory, can be seen in these figures. The valves (7) inside the jacket (1) can also be seen.

What has been described is a faithful reflection of the invention which is the subject of this Utility Model without mere formal, circumstantial and accessory variations altering its essential nature as claimed hereafter.

## Claims

1. Self-inflatable safety jacket for motorcycle riders, characterized because it consists of a jacket provided between its outside and inside linings with a specially resistant and fireproof fabric, with a hollow inside space to which are connected the outlet valves of two compressed air bottles fitted inside the jacket. The safety catches of these two bottles are connected to a respective pair of cords about 20 to 30 cms. in length, preferably textile in nature, highly resistant and with practically nil elasticity. These cords run inside the pertinent seams provided in the jacket itself, which have an orifice to the outside through which each of these cords emerge. At their ends, these emerging cords have a respective spring hook for hooking onto a securing element located on the motorcycle either forming part of its frame or consisting in a flexible chain surrounding. This chain has a rod in its centre for connecting the spring hook. This securing element for hooking onto the driver's safety jacket is located at the top mid centre point of the motorcycle, on its longitudinal centre line, where the petrol tank and seat join. The passenger's jacket is hooked on at the rear either via rings forming part of the motorcycle or an additional chain like the foregoing mentioned or the passenger's rear rail or hand grip.
